# EUROPÄISCHE PATENTSCHRIFT

(11) **EP 3 755 914 B1**
(45) Veröffentlichungstag und Bekanntmachung des Hinweises auf die Patenterteilung: **23.11.2022**
(21) Anmeldenummer: 19704722.8
(22) Anmeldetag: 22.01.2019
(51) Int. Cl.: F16D 13/56, F16D 13/52, F16D 13/71, F16D 13/70

(54) **REIBKUPPLUNG FÜR EINEN ANTRIEBSSTRANG EINES KRAFTFAHRZEUGS MIT ZUMINDEST EINER BLATTFEDER ZUR VERSTÄRKUNG EINER ANPRESSKRAFT EINER FEDEREINRICHTUNG**
FRICTION CLUTCH FOR A DRIVETRAIN OF A MOTOR VEHICLE HAVING AT LEAST ONE LEAF SPRING FOR BOOSTING A PRESSING FORCE OF A SPRING DEVICE
EMBRAYAGE À FRICTION POUR UNE CHAÎNE CINÉMATIQUE D'UN VÉHICULE À MOTEUR, COMPRENANT AU MOINS UN RESSORT À LAMES DESTINÉ À AMPLIFIER UNE FORCE DE PRESSION D'UN DISPOSITIF À RESSORT

(30) Priorität: 22.02.2018 DE 102018103984
(43) Veröffentlichungstag der Anmeldung: 30.12.2020
(73) Patentinhaber: Schaeffler Technologies AG & Co. KG, 91074 Herzogenaurach (DE)
(72) Erfinder: HAMMERSTIEL, Fabian, 76189 Karlsruhe (DE); RABER, Christoph, 66564 Ottweiler-Steinbach (DE); VOGEL, Florian, 77815 Bühl (DE); FINKENZELLER, Marc, 77723 Gengenbach (DE); RÖLL, Marcel, 77833 Ottersweier (DE); ASCHOFF, Michael, 77815 Bühl (DE)
(86) Internationale Anmeldenummer: PCT/DE2019/100065
(87) Internationale Veröffentlichungsnummer: WO 2019/161829

(56) Entgegenhaltungen:
- WO-A1-2017/129178
- DE-A1-102014 224 374

## Beschreibung

Die vorliegende Erfindung betrifft eine Reibkupplung für einen Antriebsstrang eines Kraftfahrzeugs gemäß dem Oberbegriff des Anspruchs 1. Reibkupplungen dienen in Antriebssträngen von Kraftfahrzeugen, wie beispielsweise Personenkraftwagen, Lastkraftwagen oder Krafträdern, dem Ausgleich einer Antriebsdrehzahl und einer Getriebedrehzahl insbesondere während Anfahrvorgängen des Kraftfahrzeugs.

Beim Schließen einer Lamellenkupplung im Zugbetrieb des Antriebsmotors entsteht in einer Verzahnung zwischen Lamellen und Lamellenträger durch das steigende Übertragungsmoment in der Reibkupplung eine Reibkraft, die der Anpresskraft, die in der Reibkupplung durch eine Tellerfeder erzeugt wird, entgegenwirkt. Diese Reibkraft stellt somit einen Anpresskraftverlust in der Reibkupplung dar, der bei gleichbleibender Betätigungskraft in der Reibkupplung das übertragbare Drehmoment reduziert und damit den Wirkungsgrad der Reibkupplung verschlechtert. Um ein vorgegebenes Drehmoment des Antriebsmotors mit der Reibkupplung sicher übertragen zu können, müssen diese Verluste berücksichtig und kompensiert werden. Dies wird über eine entsprechende Erhöhung der Anpresskraft realisiert, was bei einer Reibkupplung ohne Verstärkungsfunktion eine Erhöhung der Betätigungskraft der Reibkupplung mit sich bringt. Diese Tatsache kann im Konflikt mit einer maximal zulässigen Betätigungskraft und der Bauraumvorgabe für die Reibkupplung stehen.

Bekannte trockene Reibkupplungen für die Anwendung in Kraftfahrzeugen mit einem Hybridantrieb, der sowohl einen Verbrennungsmotor als auch einen Elektromotor zum Antrieb des Kraftfahrzeugs umfasst, weisen keine entsprechende Verstärkungsfunktionen der Anpresskraft auf. Die benötigte Anpresskraft wird ausschließlich durch eine Tellerfeder generiert und ist wiederum durch den Aktor zur Betätigung der Reibkupplung in ihrer Höhe begrenzt.

Eine Reibkupplung, die auf den Oberbegriff des Anspruchs 1 lesbar ist, ist aus der DE 10 2014 224 374 A1 bekannt.

Aufgabe der Erfindung ist es, die mit Bezug auf den Stand der Technik geschilderten Probleme zumindest teilweise zu lösen und insbesondere eine Reibkupplung für einen Antriebsstrang eines Kraftfahrzeugs mit insbesondere einem Hybridantrieb anzugeben, bei der ein Anpresskraftverlust kompensierbar ist.

Diese Aufgabe wird gelöst mit einer Reibkupplung gemäß den Merkmalen des unabhängigen Anspruchs. Weitere vorteilhafte Ausgestaltungen der Reibkupplung sind in den abhängig formulierten Ansprüchen angegeben. Es ist darauf hinzuweisen, dass die in den abhängigen Ansprüchen einzeln aufgeführten Merkmale in beliebiger technologisch sinnvoller Weise miteinander kombiniert werden können und weitere Ausgestaltungen der Erfindung definieren. Darüber hinaus werden die in den Ansprüchen angegebenen Merkmale in der Beschreibung näher präzisiert und erläutert, wobei weitere bevorzugte Ausgestaltungen der Erfindung dargestellt werden.

Hierzu trägt eine Reibkupplung für einen Antriebsstrang eines Kraftfahrzeugs bei, die zumindest die folgenden Komponenten aufweist:
- ein Eingangsteil mit einem durch zumindest einen Antriebsmotor um eine Drehachse drehbaren Außenlamellenträger, wobei an dem Außenlamellenträger zumindest eine Außenlamelle befestigt ist;
- ein Ausgangsteil mit einem Rotorträger und einem von dem Rotorträger getrennten Innenlamellenträger, wobei an dem Innenlamellenträger zumindest eine Innenlamelle befestigt ist;
- zumindest eine Federeinrichtung, mit der die zumindest eine Außenlamelle und die zumindest eine Innenlamelle zum Schließen der Reibkupplung mit einer Anpresskraft verspannbar sind;
- eine Abstandslamelle, mittels der die zumindest eine Außenlamelle und die zumindest eine Innenlamelle in einer axialen Richtung von dem Rotorträger beabstandet sind; und
- zumindest eine Blattfeder, die mit dem Innenlamellenträger und dem Rotorträger derart verbunden ist, dass die zumindest eine Blattfeder bei Einleitung eines Drehmoments durch den Antriebsmotor die Anpresskraft mit einer Verstärkungskraft verstärkt.

Die vorgeschlagene (trockene) Reibkupplung ist für einen Antriebsstrang eines Kraftfahrzeugs, beispielsweise eines Personenkraftwagens, Lastkraftwagens und/oder Kraftrads, vorgesehen. Solche Kraftfahrzeuge weisen regelmäßig zumindest einen Antriebsmotor zum Antreiben des Kraftfahrzeugs auf. Bei dem zumindest einen Antriebsmotor kann es sich insbesondere um einen Hybridmotor handeln, der sowohl einen Verbrennungsmotor als auch zumindest einen Elektroantrieb zum Antrieb des Kraftfahrzeugs aufweist. Der zumindest eine Elektromotor kann beispielsweise mit einer Betriebsspannung von 24 V (Volt) oder 48 V betreibbar sein. Weiterhin weisen solche Kraftfahrzeuge regelmäßig ein Getriebe auf, das beispielsweise als Automatikgetriebe oder ein von einem Fahrer manuell geschaltetes Schaltgetriebe ausgebildet sein kann.

Die Reibkupplung umfasst ein um eine Drehachse mittels des Antriebsmotors verdrehbar angeordnetes, antriebsseitiges Eingangsteil, das direkt oder indirekt beispielsweise mit einer Kurbelwelle des Antriebsmotors bzw. des Verbrennungsmotors des Hybridantriebs verbindbar ist. Weiterhin umfasst die Reibkupplung ein gegenüber dem Eingangsteil koaxial und um die Drehachse verdrehbar angeordnetes Ausgangsteil, das beispielsweise mit einer Getriebeeingangswelle des Getriebes indirekt oder direkt verbindbar ist. Das Ausgangsteil weist ferner einen Rotorträger auf, der mit einem Rotor des Elektromotors eines Hybridantriebs verbindbar ist und/oder durch den Elektromotor um die Drehachse antreibbar ist. Der Elektromotor kann koaxial zu der Drehachse der Reibkupplung bzw. zu der Drehachse des Rotorträgers angeordnet sein, sodass der Rotor des Elektromotors den Rotorträger umgibt. Der Rotorträger kann beispielsweise über eine Verzahnung an einer Umfangsfläche des Rotorträgers mit dem Rotor des Elektromotors verbunden sein. Weiterhin kann der Elektromotor parallel zu der Drehachse der Reibkupplung bzw. der Drehachse des Rotorträgers angeordnet sein. In diesem Fall kann der Elektromotor eine Riemenscheibe antreiben, die die Reibkupplung zumindest teilweise umgibt.

Somit ist die Reibkupplung, vorzugsweise die trockene Lamellenkupplung, in ein nichtdargestelltes Hybridmodul zum An- und Abkoppeln eines Verbrennungsmotors an den und vom Antriebsstrang eines Kraftfahrzeugs integriert, d.h. die Reibkupplung 1 bildet eine KO-Kupplung. Bei dem Hybridmodul kann es sich um ein Hybridmodul mit koaxialem Elektromotor, dessen Rotor die KO-Kupplung umgibt, oder um ein Hybridmodul mit achsparallelem Elektromotor, der eine Riemenscheibe antreibt, die die KO-Kupplung umgibt, handeln. Im letztgenannten Fall ist diese Riemenscheibe aus dem Rotorträger und dem Rotor einteilig ausgebildet, oder die Riemenscheibe wird vom Rotorträger getragen, d.h. ist in dessen Außenumfang auf den Rotorträger aufgezogen.

Zwischen dem Eingangsteil und dem Ausgangsteil ist eine in eine Umfangsrichtung um die Drehachse wirksame, zwischen einer Offenstellung und Schließstellung schaltbare Reibeinheit vorgesehen. Die Reibeinheit umfasst zumindest eine mit einem Außenlamellenträger des Eingangsteils verdrehfest verbundene Außenlamelle und zumindest eine mit einem Innenlamellenträger des Ausgangsteils verdrehfest verbundene Innenlamelle. Die zumindest eine Außenlamelle kann über eine Verzahnung mit dem Außenlamellenträger und/oder die zumindest eine Innenlamelle über eine Verzahnung mit dem Innenlamellenträger verbunden sein. Der Innenlamellenträger ist insbesondere ringförmig, zumindest teilweise rohrförmig, zumindest teilweise aus Stahl gefertigt und/oder weist einen L-förmigen Querschnitt auf. Weiterhin ist der Innenlamellenträger von dem Rotorträger getrennt. Dies bedeutet, dass der Innenlamellenträger in einer Umfangsrichtung um die Drehachse nicht direkt bzw. unmittelbar mit dem Rotorträger verdrehfest gekoppelt ist. Weiterhin kann der Innenlamellenträger in der axialen Richtung gegenüber dem Rotorträger begrenzt verlagerbar ausgebildet sein. Der Innenlamellenträger kann fest mit einem Drucktopf verbunden sein, über den zum einen die Reibkupplung betätigbar und über den zum anderen eine von zumindest einer Federeinrichtung erzeugte Anpresskraft auf die zumindest eine Außenlamelle und die zumindest eine Innenlamelle übertragbar ist. Die zumindest eine Federeinrichtung drückt insbesondere von einer Motorseite der Reibkupplung auf den Drucktopf, sodass der Drucktopf die Anpresskraft auf den Innenlamellenträger überträgt. Die Reibkupplung ist mit einer Ausrückvorrichtung ausrückbar, in dem die Ausrückvorrichtung eine der Anpresskraft entgegenwirkende Ausrückkraft auf den Drucktopf erzeugt. Durch die Ausrückkraft ist der Drucktopf begrenzt in der axialen Richtung verlagerbar. Zwischen dem Innenlamellenträger und dem Drucktopf kann eine Modulationsfeder angeordnet sein. Die Modulationsfeder kann ein festes Ende und ein freies Ende aufweisen, wobei das feste Ende insbesondere mit dem Innenlamellenträger verbunden ist. Das freie Ende ragt in der axialen Richtung von dem Innenlamellenträger insbesondere in Richtung des Drucktopfs. Auf diese Weise kann bei Bereitstellung der Anpresskraft das Einkuppeln der Reibkupplung sanfter ausgestaltet werden. Weiterhin ist die zumindest eine Innenlamelle nicht (direkt) mit dem Rotorträger verbunden. Die zumindest eine Außenlamelle und die zumindest eine Innenlamelle können in einer axialen Richtung, d. h. insbesondere parallel zu der Drehachse, zu einem Lamellenpaket abwechselnd geschichtet angeordnet sein. Weiterhin sind die zumindest eine Außenlamelle und/oder die zumindest eine Innenlamelle insbesondere ringförmig und/oder zumindest teilweise aus Stahl gefertigt. Zudem können die zumindest eine Außenlamelle und/oder die zumindest eine Innenlamelle Reibbeläge aufweisen.

Die zumindest eine Außenlamelle und die zumindest eine Innenlamelle sind zum Schließen bzw. Einrücken der Reibkupplung durch eine Anpresskraft zumindest einer Federeinrichtung verspannbar bzw. in Reibeingriff bringbar. Bei der zumindest einen Federeinrichtung handelt es sich insbesondere um eine Tellerfeder. Die Reibkupplung ist durch die zumindest eine Federeinrichtung normal-eingerückt. Weiterhin umfasst die Reibkupplung eine Abstandslamelle, mittels der die zumindest eine Außenlamelle und die zumindest eine Innenlamelle in einer axialen Richtung von dem Rotorträger beabstandet sind. Die Reibkupplung weist darüber hinaus zumindest eine Blattfeder auf, die mit dem Innenlamellenträger und dem Rotorträger derart verbunden ist, dass die zumindest eine Blattfeder bei Einleitung eines Drehmoments durch den Antriebsmotor bzw. den Verbrennungsmotor des Hybridantriebs die Anpresskraft mit einer Verstärkungskraft verstärkt. Dies wird dadurch erreicht, dass die zumindest eine Blattfeder zwischen dem Innenlamellenträger und dem Rotorträger aufgestellt ist bzw. mit einem Aufstellwinkel angeordnet ist. Dies bedeutet insbesondere, dass die zumindest eine Blattfeder zumindest teilweise nicht parallel zu der axialen Richtung und/oder der radialen Richtung verläuft. Aufgrund des Aufstellwinkels resultiert das über den Innenlamellenträger in die zumindest eine Blattfeder eingeleitete Drehmoment in einer Kraft mit einer axialen Richtungskomponente. Die axiale Richtungskomponente der Kraft stellt die Verstärkungskraft dar, die insbesondere in der gleichen Richtung wie die Anpresskraft der zumindest einen Federeinrichtung wirkt und diese somit verstärkt. Die Reibkupplung kann eine Mehrzahl von übereinandergeschichteten Blattfedern in Form zumindest eines Blattfederpakets aufweisen. Wird von dem Antriebsmotor ein Zugmoment über den Außenlamellenträger und die zumindest eine Außenlamelle an die zumindest eine Innenlamelle und den Innenlamellenträger übertragen, überträgt der Innenlamellenträger dieses Zugmoment über die zumindest eine aufgestellte Blattfeder an den Rotorträger. Durch den Aufstellwinkel der zumindest einen Blattfeder wird durch das übertragene Drehmoment die Verstärkungskraft in der axialen Richtung erzeugt. Die Verstärkungskraft wirkt insbesondere in Richtung einer Getriebeseite auf den Innenlamellenträger. Da die Anpresskraft der zumindest einen Federeinrichtung ebenfalls auf den Innenlamellenträger wirken kann, wird die durch die zumindest einer Federeinrichtung erzeugte Anpresskraft über die in Richtung Getriebeseite wirkende Verstärkungskraft der zumindest einen Blattfeder verstärkt. Hierdurch sind Anpresskraftverluste kompensierbar.

Die Anpresskraft ist, insbesondere auf der Getriebeseite, durch die Abstandslamelle abgestützt. Die Abstandslamelle dient sowohl als Endlamelle in der Reibkupplung, die verhindert, dass der Rotorträger selbst als Reibfläche dient, als auch als Abstandshalter des Lamellenpakets, d. h. der zumindest einen Außenlamelle und der zumindest einen Innenlamelle, zum Rotorträger, um die zumindest eine aufgestellte Blattfedern zwischen dem Lamellenpaket und dem Rotorträger unterbringen zu können. Verbunden ist die zumindest eine Blattfeder insbesondere auf einer Getriebeseite der Reibkupplung mit dem Rotorträger und auf einer Motorseite der Reibkupplung mit dem Innenlamellenträger. Durch die Anbindung der Blattfedern getriebeseitig am Rotorträger und motorseitig am Innenlamellenträger wird die zumindest eine Blattfeder bei der Nutzung der Verstärkungsfunktion auf Zug belastet. Gegenüber einer Belastung auf Schub zur Nutzung der Verstärkungsfunktion hat dies für die zumindest eine Blattfeder erhebliche Vorteile hinsichtlich ihrer Dimensionierung. Auf Zug belastete Blattfedern können bei gleicher Belastung erheblich kleiner dimensioniert werden.

Der Innenlamellenträger kann drehfest mit einem Drucktopf verbunden sein, über den die Reibkupplung betätigbar ist.

Die Abstandslamelle kann die Anpresskraft abstützen.

Weiterhin bildet die Abstandslamelle einen Aufnahmeraum für die zumindest eine Blattfeder. Die zumindest eine Blattfeder ist insbesondere vollständig in dem Aufnahmeraum angeordnet.

Zudem kann sich der Innenlamellenträger in den Aufnahmeraum erstrecken.

Die Abstandslamelle kann einen rohrförmigen Abschnitt und einen flanschartigen Abschnitt aufweisen. Die Abstandslamelle ist dabei insbesondere einstückig ausgebildet.

Die Verstärkungskraft kann in eine axiale Richtung gerichtet sein.

Die Verstärkungskraft kann in Richtung einer Getriebeseite der Reibkupplung gerichtet sein.

Die zumindest eine Blattfeder kann beim Verstärken der Anpresskraft mit der Verstärkungskraft auf Zug beansprucht sein. Hierdurch kann die zumindest eine Blattfeder kleiner und damit mit einem geringeren Gewicht ausgebildet werden.

Die zumindest eine Blattfeder kann mit dem Innenlamellenträger vernietet sein. Die zumindest eine Blattfeder ist insbesondere an einem ersten längsseitigen Ende mit dem Innenlamellenträger vernietet. Die zumindest eine Blattfeder ist insbesondere an einem dem ersten längsseitigen Ende gegenüberliegenden zweiten längsseitigen Ende mit dem Rotorträger verdrehfest bzw. momentenschlüssig verbunden und/oder vernietet.

Die zumindest eine Blattfeder kann in einer axialen Richtung neben der Abstandslamelle angeordnet sein. Insbesondere ist die zumindest eine Blattfeder nicht radial innerhalb des Innenlamellenträgers und/oder der Abstandslamelle angeordnet.

Ein Querschnitt des Innenlamellenträgers kann insbesondere L-förmig ausgebildet sein.

Die Erfindung sowie das technische Umfeld werden nachfolgend anhand der Figur näher erläutert. Es ist darauf hinzuweisen, dass die Figur eine besonders bevorzugte Variante der Erfindung zeigt, diese jedoch nicht darauf beschränkt ist. Es zeigt beispielhaft und schematisch:
- Fig. 1:: eine Reibkupplung im Längsschnitt;
- Fig. 2:: die Reibkupplung in einer perspektivischen Schnittdarstellung.

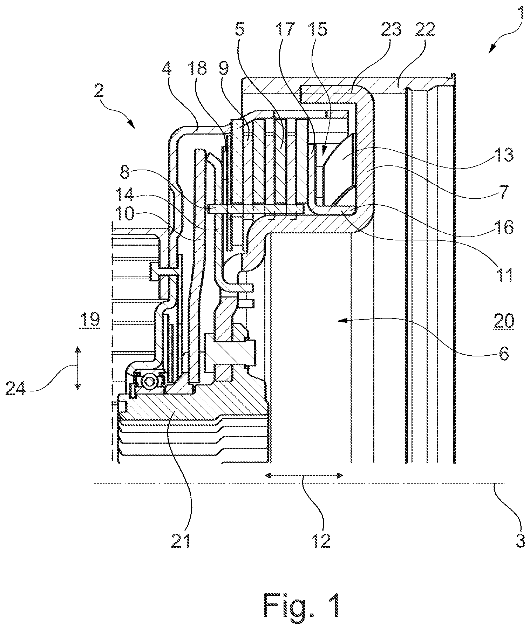

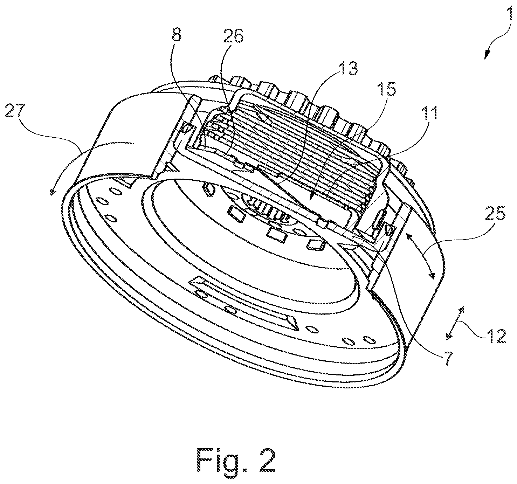

Die Fig. 1 zeigt eine Reibkupplung 1 im Längsschnitt. Insbesondere handelt es sich bei der Reibkupplung 1 um eine trockene Lamellenkupplung. Die Reibkupplung 1 weist ein auf einer Motorseite 19 angeordnetes Eingangsteil 2 und ein auf einer Getriebeseite 20 angeordnetes Ausgangsteil 6 auf. Das Eingangsteil 2 umfasst einen um eine Drehachse 3 durch einen hier nicht gezeigten Antriebsmotor bzw. Verbrennungsmotor drehbaren Außenlamellenträger 4, an dem vier Außenlamellen 5 verdrehfest über eine hier nicht gezeigte Verzahnung befestigt sind. Das Ausgangsteil 6 umfasst einen koaxial zu dem Außenlamellenträger 4 angeordneten und ebenfalls um die Drehachse 3 drehbaren Innenlamellenträger 8 auf, an dem vier Innenlamellen 9 verdrehfest über eine hier ebenfalls nicht gezeigte Verzahnung befestigt sind. Die Außenlamellen 5 und der Innenlamellenträger 9 sind durch eine Federeinrichtung 10, bei der es sich hier um eine Tellerfeder handelt, zum Schließen der Reibkupplung 1 verspannbar. Hierzu ist eine Anpresskraft der Federeinrichtung 10 über einen Drucktopf 14 und eine Modulationsfeder 18 auf den Innenlamellenträger 8 leitbar. Die Anpresskraft wird durch eine Abstandslamelle 11 abgestützt. Die Abstandslamelle 11 ist ringförmig ausgebildet und weist einen rohrförmigen Abschnitt 16 und einen flanschartigen Abschnitt 17 auf. Weiterhin beabstandet die Abstandslamelle 11 die Außenlamellen 5 und die Innenlamellen 9 in einer axialen Richtung 12, d. h. parallel zu der Drehachse 3, von einem Rotorträger 7 des Ausgangsteils 6. Zudem bildet die Abstandslamelle 11 einen Aufnahmeraum 15 für die Blattfedern 13. Die Reibkupplung 1 weist ferner eine Mehrzahl von Blattfedern 13 auf, die in einer Umfangsrichtung um die Drehachse 3 verteilt angeordnet sind und die sich von dem Innenlamellenträger 8 zu dem Rotorträger 7 erstrecken. Die Blattfedern 13 sind an einem ersten längsseitigen Ende der Blattfedern 13 mit dem Innenlamellenträger 8 und mit einem gegenüberliegenden zweiten längsseitigen Ende der Blattfedern 13 mit dem Rotorträger 7 vernietet (vgl. Fig. 2). Hierdurch ist bei geschlossener Reibkupplung 1 ein Drehmoment eines Antriebsmotors über den Außenlamellenträger 4, die Außenlamellen 5, die Innenlamellen 9, den Innenlamellenträger 8 und die Blattfedern 13 auf den Rotorträger 7 übertragbar.

Die zumindest eine Blattfeder 13 ist zwischen dem Innenlamellenträger 8 und dem Rotorträger 7 aufgestellt bzw. mit einem Aufstellwinkel angeordnet, sodass das über den Innenlamellenträger 8 in die Blattfedern 13 als Zugkraft eingeleitete Drehmoment eine Kraft mit einer axialen Richtungskomponente erzeugt. Die axiale Richtungskomponente der Kraft stellt eine Verstärkungskraft dar, die in der axialen Richtung 12 in Richtung einer Getriebeseite 20 auf den Innenlamellenträger 8 wirkt, sodass die Anpresskraft der Federeinrichtung 10 verstärkt und Anpresskraftverluste kompensiert werden. Die Reibkupplung 1 ist mittels einer hier nicht gezeigten Ausrückvorrichtung ausrückbar, indem mit dieser eine Ausrückkraft entgegen der Anpresskraft der Federeinrichtung 10 auf den sich durch den Rotorträger 7 erstreckenden Drucktopf 14 in der axialen Richtung 12 in Richtung der Motorseite 19 gerichtet wird. Die Ausrückvorrichtung ist zumindest teilweise in einer radialen Richtung 24 innerhalb des Rotorträgers 7 angeordnet. Alternativ oder kumulativ ist der Rotorträger 7 durch einen Rotor 22 eines hier nicht weiter gezeigten Elektromotors um die Drehachse 3 drehbar. Hierzu ist der Rotorträger 7 über seine Umfangsfläche 23 mit dem Rotor 22 verdrehfest verbunden. Der Rotorträger 7 ist zudem verdrehfest mit einer Nabe 21 verbunden, sodass die Nabe 21 mit dem Rotorträger 7 um die Drehachse 3 drehbar ist.

Die Fig. 2 zeigt die Reibkupplung 1 in einer perspektivischen Schnittdarstellung. Zu erkennen ist hier die Verbindung einer der Blattfedern 13 an dem Rotorträger 7 und dem Innenlamellenträger 8. Die Blattfedern 13 erstrecken sich von dem Rotorträger 7 in der axialen Richtung 12 und der Umfangsrichtung 25 zu einem Kragen 26 des Innenlamellenträgers 8, der in den durch die Abstandslamelle 11 gebildeten Aufnahmeraum 15 für die Blattfedern 13 hineinragt.

Mit Bezug auf Fig. 2 ist die Drehrichtung 27 gegen den Uhrzeigersinn, um die Blattfedern 13 auf Zug zu belasten, und um die Verstärkungsfunktion der Blattfedern 13 zu nutzen. Wenn ein Drehmoment in der Drehrichtung 27 durch den nicht dargestellten Verbrennungsmotor von der Motorseite 19 kommend über den Außenlamellenträger 4 und die Außenlamellen 5 bei eingerückter Reibkupplung 1 auf die Innenlamellen 9 und den Innenlamellenträger 8 eingeleitet wird, sorgt das Drehmoment in der Drehrichtung 27 dafür, dass der Reibschluss zwischen Außenlamellen 5 und Innenlamellen 9 durch die auf Zug beanspruchten, aufgestellten Blattfedern 13 verstärkt wird, da der Kragen 26 des in axialer Richtung 12 verlagerbaren Innenlamellenträgers 8 in Richtung des Rotorträgers 7 gezogen wird. Somit steigt die Drehmomentkapazität der Reibkupplung 1, wodurch die Reibkupplung 1 kleiner ausgelegt werden kann, als dies ohne Verstärkungsfunktion der Blattfedern 13 der Fall gewesen wäre. Anders ausgedrückt, sind durch die Verstärkungsfunktion der Blattfedern 13 Anpresskraftverluste kompensierbar.

Insbesondere ist die Reibkupplung 1, genauer gesagt die trockene Lamellenkupplung, in ein nichtdargestelltes Hybridmodul zum An- und Abkoppeln eines Verbrennungsmotors an den und vom Antriebsstrang eines Kraftfahrzeugs ausgebildet, d.h. die Reibkupplung 1 bildet eine KO-Kupplung. Bei dem Hybridmodul kann es sich um ein Hybridmodul mit koaxialem Elektromotor, dessen Rotor die KO-Kupplung umgibt, oder um ein Hybridmodul mit achsparallelem Elektromotor, der eine Riemenscheibe antreibt, die die KO-Kupplung umgibt, handeln. Im letztgenannten Fall ist diese Riemenscheibe aus dem Rotorträger 7 und dem Rotor 22 einteilig ausgebildet, oder die Riemenscheibe wird vom Rotorträger 7 getragen, d.h. ist in dessen Außenumfang auf den Rotorträger 7 aufgezogen.

## Patentansprüche

1. Reibkupplung (1) für einen Antriebsstrang eines Kraftfahrzeugs, aufweisend:
- ein Eingangsteil (2) mit einem durch zumindest einen Antriebsmotor um eine Drehachse (3) drehbaren Außenlamellenträger (4), wobei an dem Außenlamellenträger (4) zumindest eine Außenlamelle (5) befestigt ist;
- ein Ausgangsteil (6) mit einem Rotorträger (7) und einem von dem Rotorträger (7) getrennten Innenlamellenträger (8), wobei an dem Innenlamellenträger (8) zumindest eine Innenlamelle (9) befestigt ist;
- zumindest eine Federeinrichtung (10), mit der die zumindest eine Außenlamelle (5) und die zumindest eine Innenlamelle (9) zum Schließen der Reibkupplung (1) mit einer Anpresskraft verspannbar sind;
- eine Abstandslamelle (11), mittels der die zumindest eine Außenlamelle (5) und die zumindest eine Innenlamelle (9) in einer axialen Richtung (12) von dem Rotorträger (7) beabstandet sind; und
- zumindest eine Blattfeder (13), die mit dem Innenlamellenträger (8) und dem Rotorträger (7) derart verbunden ist, dass die zumindest eine Blattfeder (13) bei Einleitung eines Drehmoments durch den Antriebsmotor die Anpresskraft mit einer Verstärkungskraft verstärkt,
**dadurch gekennzeichnet, dass** die Abstandslamelle (11) einen Aufnahmeraum (15) für die zumindest eine Blattfeder (13) bildet.

2. Reibkupplung (1) nach Anspruch 1, wobei der Innenlamellenträger (8) drehfest mit einem Drucktopf (14) verbunden ist, über den die Reibkupplung (1) betätigbar ist.

3. Reibkupplung (1) nach Anspruch 1 oder 2, wobei die Abstandslamelle (11) die Anpresskraft abstützt.

4. Reibkupplung (1) nach einem der vorhergehenden Ansprüche, wobei sich der Innenlamellenträger (8) in den Aufnahmeraum (16) erstreckt.

5. Reibkupplung (1) nach einem der vorhergehenden Ansprüche, wobei die Abstandslamelle (11) einen rohrförmigen Abschnitt (16) und einen flanschartigen Abschnitt (17) aufweist.

6. Reibkupplung (1) nach einem der vorhergehenden Ansprüche, wobei die Verstärkungskraft in die axiale Richtung (12) gerichtet ist.

7. Reibkupplung (1) nach einem der vorhergehenden Ansprüche, wobei die Verstärkungskraft in Richtung einer Getriebeseite (20) der Reibkupplung (1) gerichtet ist.

8. Reibkupplung (1) nach einem der vorhergehenden Ansprüche, wobei die zumindest eine Blattfeder (13) beim Verstärken der Anpresskraft mit der Verstärkungskraft auf Zug beansprucht ist.

9. Reibkupplung (1) nach einem der vorhergehenden Ansprüche, wobei die zumindest eine Blattfeder (13) mit dem Innenlamellenträger (8) vernietet ist.

## Claims

1. A friction clutch (1) for a drivetrain of a motor vehicle, having:
- an input part (2) with an outer plate carrier (4) rotatable about an axis of rotation (3) by at least one drive motor, wherein at least one outer plate (5) is attached to the outer plate carrier (4);
- an output part (6) with a rotor carrier (7) and an inner plate carrier (8) separated from the rotor carrier (7), wherein at least one inner plate (9) is attached to the inner plate carrier (8);
- at least one spring device (10), with which the at least one outer plate (5) and the at least one inner plate (9) can be tensioned with a pressing force for closing the friction clutch (1);
- a spacer plate (11), by means of which the at least one outer plate (5) and the at least one inner plate (9) are spaced apart from the rotor carrier (7) in an axial direction (12); and
- at least one leaf spring (13) which is connected to the inner-plate carrier (8) and the rotor carrier (7) in such a way that the at least one leaf spring (13) increases the pressing force with a reinforcing force when a torque is introduced by the drive motor,
**characterised in that** the spacer plate (11) forms a receiving space (15) for the at least one leaf spring (13).

2. The friction clutch (1) according to claim 1, wherein the inner plate carrier (8) is rotationally fixed to a pressure pot (14), via which the friction clutch (1) can be actuated.

3. The friction clutch (1) according to claim 1 or 2, wherein the spacer plate (11) supports the pressing force.

4. The friction clutch (1) according to one of the preceding claims, wherein the inner plate carrier (8) extends into the receiving space (16).

5. The friction clutch (1) according to one of the preceding claims, wherein the spacer plate (11) has a tube-shaped portion (16) and a flange-like portion (17).

6. The friction clutch (1) according to one of the preceding claims, wherein the reinforcing force is directed in the axial direction (12).

7. The friction clutch (1) according to one of the preceding claims, wherein the reinforcing force is directed in the direction of a transmission side (20) of the friction clutch (1).

8. The friction clutch (1) according to one of the preceding claims, wherein the at least one leaf spring (13) is subjected to tensile stress when reinforcing the pressing force with the reinforcing force.

9. The friction clutch (1) according to one of the preceding claims, wherein the at least leaf spring (13) is riveted to the inner plate carrier (8).

## Revendications

1. Embrayage à friction (1) pour une chaîne cinématique d'un véhicule à moteur, comprenant :
- une partie d'entrée (2) dotée d'un support de disque extérieur (4) pouvant tourner autour d'un axe de rotation (3) au moyen d'au moins un moteur d'entraînement, au moins un disque extérieur (5) étant fixé au support de disque extérieur (4) ;
- une partie de sortie (6) dotée d'un support de rotor (7) et d'un support de disque intérieur (8) séparé du support de rotor (7), au moins un disque intérieur (9) étant fixé au support de disque intérieur (8) ;
- au moins un dispositif à ressort (10), avec lequel l'au moins un disque extérieur (5) et l'au moins un disque intérieur (9) peuvent être serrés avec une force de pression pour fermer l'embrayage à friction (1) ;
- un disque d'espacement (11), au moyen duquel l'au moins un disque extérieur (5) et l'au moins un disque intérieur (9) sont espacés du support de rotor (7) dans une direction axiale (12) ; et
- au moins un ressort à lames (13) qui est relié au support de disque intérieur (8) et au support de rotor (7) de façon que l'au moins un ressort à lames (13) amplifie la force de pression avec une force d'amplification en introduisant un couple par le biais du moteur d'entraînement,
**caractérisé en ce que** le disque d'espacement (11) forme un espace de réception (15) pour l'au moins un ressort à lames (13).

2. Embrayage à friction (1) selon la revendication 1, dans lequel le support de disque intérieur (8) est relié solidaire en rotation à un pot de pression (14) par l'intermédiaire duquel l'embrayage à friction (1) peut être actionné.

3. Embrayage à friction (1) selon la revendication 1 ou 2, le disque d'espacement (11) supportant la force d'amplification.

4. Embrayage à friction (1) selon l'une quelconque des revendications précédentes, dans lequel le support de disque interne (8) s'étend dans l'espace de réception (16).

5. Embrayage à friction (1) selon l'une quelconque des revendications précédentes, dans lequel le disque d'espacement (11) comprend une partie tubulaire (16) et une partie en forme de bride (17).

6. Embrayage à friction (1) selon l'une quelconque des revendications précédentes, dans lequel la force d'amplification est dirigée dans le sens axial (12).

7. Embrayage à friction (1) selon l'une quelconque des revendications précédentes, dans lequel la force d'amplification est dirigée en direction d'un côté de transmission (20) de l'embrayage à friction (1).

8. Embrayage à friction (1) selon l'une quelconque des revendications précédentes, dans lequel l'au moins un ressort à lames (13) est sollicité en traction lors de l'amplification de la force de pression avec la force d'amplification.

9. Embrayage à friction (1) selon l'une quelconque des revendications précédentes, dans lequel l'au moins un ressort à lames (13) est riveté au support de disque intérieur (8).
